# EUROPEAN PATENT SPECIFICATION

(11) **EP 3 852 040 B1**
(45) Date of publication and mention of the grant of the patent: **22.05.2024**
(21) Application number: 21164219.4
(22) Date of filing: 23.03.2021
(51) Int. Cl.: H04L 9/00, H04L 9/40, G06Q 20/02

(54) **BLOCKCHAIN TRANSFER PROCESSING METHOD AND APPARATUS, DEVICE, AND MEDIUM**
VERFAHREN UND EINRICHTUNG ZUR VERARBEITUNG VON BLOCKCHAIN-ÜBERTRAGUNGEN, VORRICHTUNG UND MEDIUM
PROCÉDÉ ET APPAREIL, DISPOSITIF ET SUPPORT DE TRAITEMENT DE TRANSFERT DE CHAÎNES DE BLOCS

(30) Priority: 15.07.2020 CN 202010677728
(43) Date of publication of application: 21.07.2021
(73) Proprietor: BAIDU ONLINE NETWORK TECHNOLOGY (BEIJING) CO., LTD., Beijing 100085 (CN)
(72) Inventor: XIAO, Wei, BEIJING, 100085 (CN)
(74) Representative: Viering, Jentschura & Partner mbB Patent- und Rechtsanwälte

(56) References cited:
- CN-A- 110 222 120
- US-A1- 2018 101 844
- US-A1- 2018 150 832
- US-A1- 2019 130 387
- US-A1- 2021 271 766
- Andreas M Antonopoulos: "Mastering Bitcoin", , 21 July 2017 (2017-07-21), XP055570487, ISBN: 978-1-4919-5438-6 Retrieved from the Internet: URL:https://www.oreilly.com/library/view/m astering-bitcoin-2nd/9781491954379/ [retrieved on 2019-03-18]
- ETHAN HEILMAN ET AL: "Blindly Signed Contracts: Anonymous On-Blockchain and Off-Blockchain Bitcoin Transactions", IACR, INTERNATIONAL ASSOCIATION FOR CRYPTOLOGIC RESEARCH, vol. 20160125:082638, 23 January 2016 (2016-01-23), pages 1-15, XP061020030, [retrieved on 2016-01-23]
- SINGH NIKITA ET AL: "Blockchain based e-Cheque Clearing Framework", SCALABLE COMPUTING: PRACTICE AND EXPERIENCE, vol. 20, no. 3, 22 September 2019 (2019-09-22), pages 511-526, XP055833017, DOI: 10.12694/scpe.v20i3.1506 Retrieved from the Internet: URL:https://www.scpe.org/index.php/scpe/ar ticle/download/1506/595>

## Description

### TECHNICAL FIELD

The present disclosure relates to a field of computer technology, and particularly to a blockchain technology.

### BACKGROUND

A common function of a blockchain system is to transfer digital currencies. A transfer operation realized in the existing blockchain system needs to clarify a transfer-out account and a transfer-in account, i.e., a payer and a payee, so as to store data records involved in the transfer operation in a block and realize a point-to-point transfer.

However, as the blockchain system is promoted in more and more business scenarios, it is difficult for the mode of the above transfer operation to adapt to various transfer requirements under complex business scenarios. It is know in the art the following prior arts

US2018101844A1 published 2018-04-12 "Method for issuing, using, refunding, settling and revocating electronic voucher using updated status of balance database by respective blocks in blockchain, and server using the same" discloses A method of issuing an electronic voucher by an issuer is provided. The method includes steps of: (a) creating and registering a transaction including a voucher data, a public key and a signature value of the issuer, with a private blockchain database, providing the issuer with a PrivTxid locating the transaction in the private blockchain database, and updating and registering value information including a balance of the voucher data with a BDB; and (b) acquiring and registering a representative hash value calculated using a specific hash value, which is a hash value of the voucher data, the public key, and the signature value, and its corresponding hash values which include a hash value of a delta_n including all balances of all vouchers, identifiable by all PrivTxids locating their transactions, with a public blockchain database, and acquiring a Txid locating the representative hash value in the public blockchain database.

CN1 10222120A published 2019-09-10 "Asset exchange method based on UTXO model block chain intelligent contract" discloses The invention discloses an asset exchange method based on a UTXO model block chain intelligent contract. The method comprises the following steps: constructing an intelligent contract; the sender locks a specified number of assets into the smart contract to complete asset transfer of the sender; if the receiver unlocks the smart contract, a specified number of assets are sent to the address of the sender according to the conditions stipulated by the smart contract, the receiver obtains the assets locked by the sender in the smart contract through verification, and meanwhile, the sender also obtains the assets exchanged by the receiver; and if no receiver unlocks the smart contract all the time, the sender unlocks the contract in a preset verification self-mode, and returns the asset locked by the smart contract to the sender. According to the invention, various types of asset exchange scenes are conveniently realized, the output state of the transaction is substantially verified, and the verification comprises transaction output asset types, asset quantity, asset types, receiving addresses and the like, so that the transaction efficiency, security and reliability are improved.

XP055833017 published 2019-09-22 "Blockchain based E-Cheque clearance framework".

XP061020030 published 2016-01-23 "Blindly Signed Contracts: Anonymous On-Blockchain and Off-Blockchain Bitcoin Transactions"

XP055570487 published 2017-07-21 "Mastering Bitcoin" from Andreas M Antonopoulos

XP055728126 published 2018-12-31 "Mastering Ethereum "

### SUMMARY

Embodiments of the present disclosure provide a blockchain transfer processing method and apparatus, a device, and a medium.

According to an aspect of the present disclosure, there is provided a blockchain transfer processing method, including:
acquiring, by a blockchain node, a transfer transaction request initiated by a payer, based on a deployment program of the blockchain system;
acquiring, by the blockchain node, a transfer agreement identifier according to the transfer transaction request and locking a to-be-transferred currency resource in an account of the payer, if a transfer type of the transfer transaction request is a non-fixed-payee type during execution of a chaining process of the transfer transaction request; when the transfer type of the transfer transaction request is the non-fixed-payee type, there is no information of the payee in the transfer data input by the payer;
acquiring, by the blockchain node, a collection transaction request initiated by a payee; and
performing, by the blockchain node, a verification of the transfer agreement identifier carried in the collection transaction request during execution of a chaining process of the collection transaction request, and unlocking and transferring the to-be-transferred currency resource to an account of the payee, if the verification is successful,
wherein, the currency resource is Unspent Transaction Output (UTXO).

According to another aspect of the present disclosure, there is provided a blockchain transfer processing apparatus, including:
a transfer transaction request acquisition module, configured to acquire a transfer transaction request initiated by a payer;
a transfer agreement identifier acquisition module, configured to acquire a transfer agreement identifier according to the transfer transaction request and lock a to-be-transferred currency resource in an account of the payer, if a transfer type of the transfer transaction request is a non-fixed-payee type during execution of a chaining process of the transfer transaction request;
a collection transaction request acquisition module, configured to acquire a collection transaction request initiated by a payee; and
a transfer agreement identifier verification module, configured to perform a verification of the transfer agreement identifier carried in the collection transaction request during execution of a chaining process of the collection transaction request, and unlock and transfer the to-be-transferred currency resource to an account of the payee, if the verification is successful.

According to still another aspect of the present disclosure, there is provided an electronic device, including:
at least one processor; and
a memory communicatively connected to the at least one processor, wherein
the memory stores instructions executable by the at least one processor, the instructions, when executed by the at least one processor, enable the at least one processor to perform the blockchain transfer processing method provided by any embodiment of the present disclosure.

According to yet another aspect of the present disclosure, there is provided a non-transitory computer-readable storage medium for storing computer instructions, wherein the computer instructions, when executed by a computer, cause the computer to implement the blockchain transfer processing method provided by any embodiment of the present disclosure.

According to the technology of the present disclosure, it solves the problem that the existing transfer operation mode is difficult to adapt to various transfer requirements under complex business scenarios, and realizes a non-point-to-point transfer.

It should be understood that the content described in this section is intended neither to identify the key or important features of the embodiments of the present disclosure, nor to limit the scope of the present disclosure. Other features of the present disclosure will be easily understood from the following description.

### BRIEF DESCRIPTION OF THE DRAWINGS

The accompanying drawings are provided for better understanding of the solution, rather than limiting the present disclosure. In which,
FIG. 1 is a schematic diagram of a blockchain transfer processing method according to an embodiment of the present disclosure;
FIG. 2 is a schematic diagram of another blockchain transfer processing method according to an embodiment of the present disclosure;
FIG. 3 is a schematic diagram of still another blockchain transfer processing method according to an embodiment of the present disclosure;
FIG. 4 is a schematic diagram of yet another blockchain transfer processing method according to an embodiment of the present disclosure;
FIG. 5 is a block diagram of a blockchain transfer processing apparatus according to an embodiment of the present disclosure; and
FIG. 6 is a block diagram of an electronic device for implementing a blockchain transfer processing method of an embodiment of the present disclosure.

### DETAILED DESCRIPTION OF THE EMBODIMENTS

Exemplary embodiments of the present disclosure are described below with reference to the accompanying drawings, including various details of the embodiments of the present disclosure to facilitate understanding, and they should be considered as merely exemplary. Thus, it should be realized by those of ordinary skill in the art that various changes and modifications can be made to the embodiments described here without departing from the scope and spirit of the present disclosure. Also, for the sake of clarity and conciseness, the contents of well-known functions and structures are omitted in the following description.

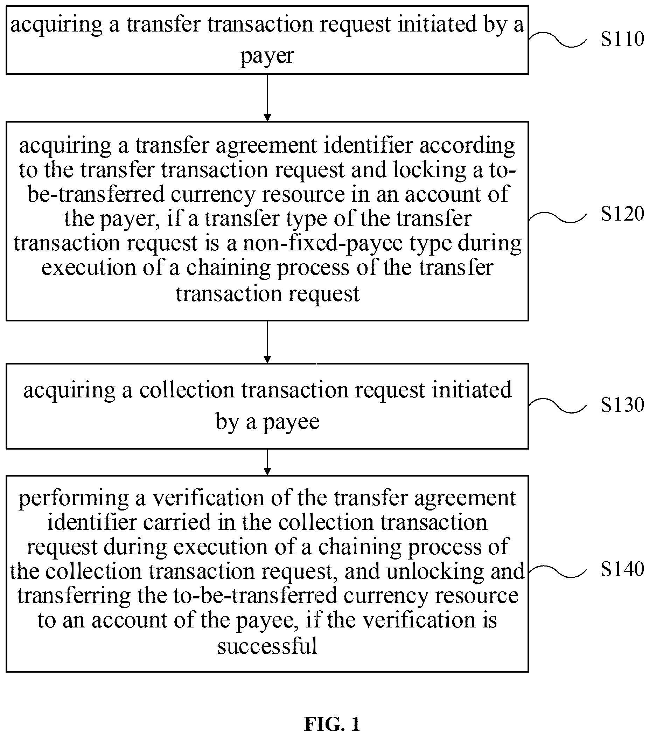

FIG. 1 is a schematic diagram of a blockchain transfer processing method according to an embodiment of the present disclosure. This embodiment is applicable to non-point-to-point transfers. The method may be performed by a blockchain transfer processing apparatus, which is implementable by software and/or hardware and specifically configured in an electronic device carrying blockchain nodes. The blockchain node may be a lightweight node or a full node in a blockchain network, so long as being capable of participating in the operation of the blockchain network based on a deployment program of the blockchain system, and it is not limited here. Specifically, referring to FIG. 1, the method includes:
S 110: acquiring a transfer transaction request initiated by a payer.

The transfer transaction request is a request initiated based on a deployment program of the blockchain system, and it may be either initiated by a user at a local node or received from other blockchain nodes.

Among them, the transfer transaction request may be either a non-fixed-payee transfer transaction request, i.e., only a payer is known while a payee is not specified; or an ordinary transfer transaction request, i.e., a preset amount of currency in an account of the payer is requested to be transferred to a specified account of the payee. In this embodiment, a transfer type of the transfer transaction request initiated by the payer may be either a non-fixed-payee type or a fixed payee type, which is not limited here.

In an optional implementation of this embodiment, any blockchain node may process transfer data initiated by the payer by calling a transfer payment interface function deployed in a blockchain system after the blockchain node acquires the transfer data initiated by the payer, so as to obtain the transfer transaction request initiated by the payer. Among them, the transfer data initiated by the payer may include a to-be-transferred amount, an effective collection time or a payee, etc., wherein the to-be-transferred amount may be RMB 100 yuan, 500 yuan or 10,000 yuan, etc., which is not limited here; and the effective collection time may be 1 hour, 2 hours or 24 hours, etc., which is not limited here.

For example, any blockchain node may process the transfer data (the to-be-transferred amount is RMB200 yuan and the effective collection time is 24 hours) input by the payer by calling the transfer payment interface function deployed in the blockchain system after the transfer data input by the payer is acquired by the blockchain node, to obtain the initiated transfer transaction request.

S 120: acquiring a transfer agreement identifier according to the transfer transaction request and locking a to-be-transferred currency resource in an account of the payer, if a transfer type of the transfer transaction request is a non-fixed-payee type during execution of a chaining process of the transfer transaction request.

Among them, when the transfer type of the transfer transaction request is the non-fixed-payee type, the transfer agreement identifier is acquired, which is a voucher for identifying the payee later. The transfer agreement identifier is an agreed content between the payer and the payee, and may be in the form of a character string. The agreed content itself is not limited, and optionally, the transfer agreement identifier may be obtained by encrypting the non-fixed-payee transfer data input by the payer through a private key of the payer to obtain an encrypted character string, and further visually encoding the character string. It can be understood that when the transfer type of the transfer transaction request is the non-fixed-payee type, there is no information of the payee in the transfer data input by the payer.

For example, any blockchain node may encrypt the non-fixed-payee transfer data (the to-be-transferred amount is RMB200 yuan and the effective collection time is 24 hours) input by the payer using a private key of the payer by calling the transfer payment interface function deployed in the blockchain system after the transfer data is acquired by the blockchain node, to obtain an encrypted character string; further, the encrypted character string is visually encoded, so as to obtain the non-fixed-payee transfer agreement identifier initiated by the payer.

In an optional implementation of this embodiment, after the transfer transaction request initiated by the payer is acquired, a chaining operation on the transfer transaction request may be further performed. In the chaining process, if the transfer type of the transfer transaction request initiated by the payer is determined as the non-fixed-payee type, it is possible to obtain the transfer identifier according to the acquired transfer transaction request and lock the to-be-transferred currency resource in the account of the payer.

In a specific example of this embodiment, after the blockchain node acquires a transfer transaction request A initiated by the payer, if the transfer type of the transfer transaction request A is determined as the non-fixed-payee type during execution of the chaining process of the transfer transaction request A, the transfer agreement identifier may be acquired according to the transfer transaction request A, and the to-be-transferred currency resource in the account of the payer may be locked. Transfer transaction data, such as the transfer transaction request and the currency resource subjected to the transfer processing, may be chained and stored in the block.

S 130: acquiring a collection transaction request initiated by a payee.

Among them, the collection transaction request initiated by the payee may include the transfer agreement identifier input by the payee, and it is provided by the payer to the payee, and for example may be provided by the users to each other offline, which is not limited here.

In an optional implementation of this embodiment, after the transfer agreement identifier is acquired according to the non-fixed-payee transfer transaction request initiated by the payer, and the to-be-transferred currency resource in the account of the payer is locked, the transfer agreement identifier input by the payee may be further acquired. Further, the blockchain node may process the transfer agreement identifier input by the payee by calling a transfer collection interface function deployed in the blockchain system, to obtain the collection transaction request initiated by the payee.

For example, any blockchain node may process the transfer agreement identifier input by the payee by calling the transfer collection interface function deployed in the blockchain system after the transfer agreement identifier input by the payee is acquired by the blockchain node, to obtain the initiated collection transaction request.

S140: performing a verification of the transfer agreement identifier carried in the collection transaction request during execution of a chaining process of the collection transaction request, and unlocking and transferring the to-be-transferred currency resource to an account of the payee, if the verification is successful.

In an optional implementation of this embodiment, after the collection transaction request initiated by the payee is acquired, a chaining operation on the collection transaction request may be further performed; in a chaining process, a verification of the transfer agreement identifier carried in the acquired transfer transaction request may be performed, and if the verification is successful, the to-be-transferred currency resource locked in step S 120 is unlocked, and the unlocked currency resource is transferred to the account of the payee.

Optionally, performing a verification of the transfer agreement identifier carried in the acquired transfer transaction request may include: comparing the transfer agreement identifier carried in the transfer transaction request with the transfer agreement identifier acquired in the transfer transaction request initiated by the payer, and a consistency therebetween proves that the verification of the transfer agreement identifier carried in the transfer transaction request is successful.

For example, after a collection transaction request B initiated by the payee is received, a verification of the collection transaction request B may be performed during execution of a chaining process of the collection transaction request, and if the verification is successful, the locked to-be-transferred currency resource is unlocked and transferred to the account of the payee. It can be understood that if the verification of the collection transaction request B is failed, no currency resource will be transferred to the account of the payee. The transfer agreement identifier can prevent other persons from falsely claiming the currency resource of the payer. The collection transaction request, the verification result, the transfer operation data, etc., may be stored in the block as collection transaction data for recording.

In the solution of this embodiment, the transfer transaction request initiated by the payer is acquired; the transfer agreement identifier is acquired according to the transfer transaction request and the to-be-transferred currency resource in the account of the payer is locked, if the transfer type of the transfer transaction request is the non-fixed-payee type during execution of the chaining process of the transfer transaction request; the collection transaction request initiated by the payee is acquired; the verification of the transfer agreement identifier carried in the collection transaction request is performed during execution of the chaining process of the collection transaction request, and if the verification is successful, the to-be-transferred currency resource is unlocked and transferred to the account of the payee, thereby solving the problem that the existing transfer operation mode is difficult to adapt to various transfer requirements under complex business scenarios, and realizing a non-point-to-point (i.e., non-fixed-payee) transfer.

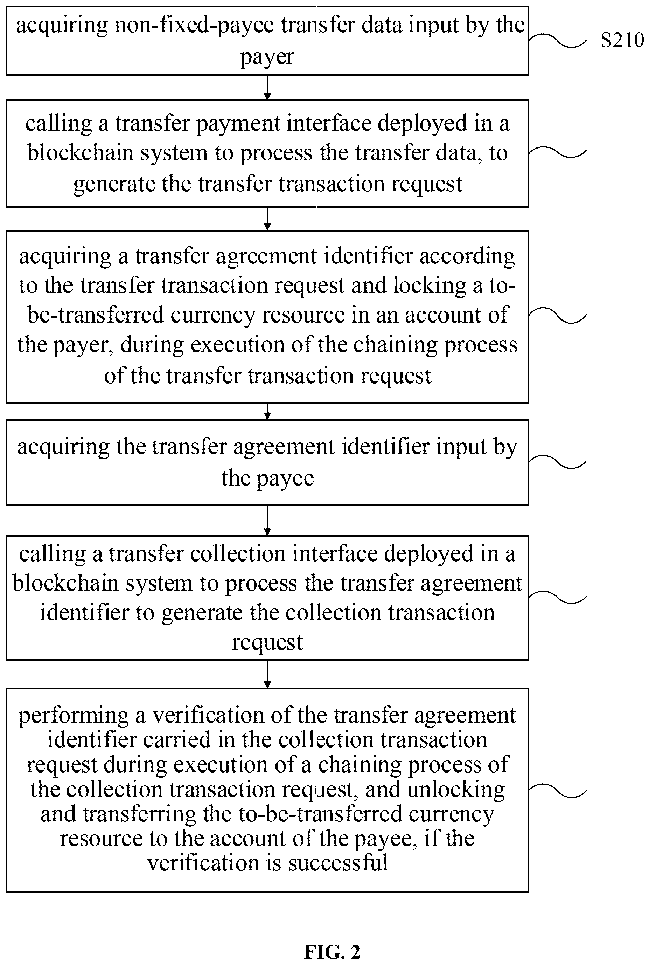

FIG. 2 is a schematic diagram of another blockchain transfer processing method according to an embodiment of the present disclosure. This embodiment is a further refinement of the above technical solution, and the technical solution in this embodiment may be combined with various optional solutions in one or more of the above embodiments. As shown in FIG. 2, a transfer processing method for a blockchain includes:
S210: acquiring non-fixed-payee transfer data input by the payer.

Among them, the transfer data may include a to-be-transferred amount and an effective collection time; the to-be-transferred amount may be any amount, which is not limited here; and the effective collection time may be within 1 hour, 2 hours or 24 hours, etc., after the input of the non-fixed-payee transfer data by the payer, which is not limited here.

S220: calling a transfer payment interface function deployed in a blockchain system to process the transfer data, to generate the transfer transaction request.

In an optional implementation of this embodiment, after the transfer data input by the payer is acquired, the transfer payment interface function deployed in the blockchain system may be further called to process the transfer data, to generate the transfer transaction request corresponding to the non-fixed-payee transfer data input by the payer.

Optionally, processing the transfer data by calling a transfer payment interface function deployed in a blockchain system, to generate the transfer transaction request may include: calling a transfer payment interface function deployed in a blockchain system, and encrypting the to-be-transferred amount and the effective collection time using a private key of the payer to obtain an encrypted character string; visually encoding the encrypted character string to obtain the transfer agreement identifier; signing the transfer data, the transfer agreement identifier and a public key of the payer using the private key of the payer, and generating the transfer transaction request.

Among them, the private key of the payer may be a private key of a blockchain account of the payer. When the blockchain account is registered, an asymmetric key pair of public and private keys may be assigned thereto.

In an optional implementation of this embodiment, after the transfer data input by the payer is acquired, the transfer payment interface function deployed in the blockchain system may be called, and the private key of the payer may be used to perform price processing on the to-be-transferred amount and the effective collection time included in the transfer data, to obtain an encrypted character string; further, the encrypted character string is visually encoded, for example, Base64 encoded to obtain the transfer agreement identifier corresponding to the non-fixed-payee transfer data input by the payer, and the visual encoding is convenient to be memorized and conveyed by the payer and the payee; further, the non-fixed-payee transfer data input by the payer, the transfer agreement identifier corresponding to the non-fixed-payee transfer data input by the payer and the public key of the payer are signed using the private key of the payer, so as to obtain the transfer transaction request corresponding to the non-fixed-payee transfer data input by the payer.

For example, if the non-fixed-payee transfer data (the to-be-transferred amount is 100 bitcoins, and the effective collection time is within 2 hours after the input of the transfer data) input by the payer is acquired, the transfer payment interface function deployed in the blockchain system may be called, and the transfer amount and the effective transfer time are encrypted using the private key of the payer, to obtain the encrypted character string A, which is Base64 encoded to obtain the transfer agreement identifier; and the transfer data, the transfer agreement identifier and the public key of the payer are signed using the private key of the payer, so as to obtain the transfer transaction request initiated by the payer.

S230: acquiring a transfer agreement identifier according to the transfer transaction request and locking a to-be-transferred currency resource in an account of the payer during execution of the chaining process of the transfer transaction request.

In an optional implementation of this embodiment, a chaining operation may be performed on the transfer transaction request initiated by the payer after it is acquired; in the chaining process, the transfer agreement identifier may be acquired according to the acquired transfer transaction request and recorded in a block, and the to-be-transferred currency resource in the account of the payer may be locked. For example, if the to-be-transferred currency resource is 100 bitcoins, the 100 bitcoins in the account of the payer may be processed to ensure that the account of the payer has enough currency resource.

S240: acquiring the transfer agreement identifier input by the payee.

Among them, the transfer agreement identifier input by the payee may include an amount to be collected by the payee.

S250: calling a transfer collection interface function deployed in a blockchain system to process the transfer agreement identifier to generate the collection transaction request.

In an optional implementation of this embodiment, the transfer collection interface function deployed in the blockchain system may be called, and a private key of the payee may be used to encrypt the transfer agreement identifier and an account identifier of the payee to generate the collection transaction request.

For example, after the transfer agreement identifier input by the payee is acquired, the transfer collection interface function deployed in the blockchain system may be called, and the private key of the payee may be used to encrypt the transfer agreement identifier input by the payee and an account identifier of the payee to obtain the collection transaction request initiated by the payee.

S260: performing a verification of the transfer agreement identifier carried in the collection transaction request during execution of a chaining process of the collection transaction request, and unlocking and transferring the to-be-transferred currency resource to the account of the payee if the verification is successful.

In the solution of this embodiment, the non-fixed-payee transfer data input by the payer is acquired; the transfer payment interface function deployed in the blockchain system is called to process the transfer data to generate the transfer transaction request; the transfer agreement identifier is acquired according to the transfer transaction request and the to-be-transferred currency resource in the account of the payer is locked during execution of the chaining process of the transfer transaction request; the transfer agreement identifier input by the payee is acquired; the transfer collection interface function deployed in the blockchain system is called to process the transfer agreement identifier to generate the collection transaction request; the verification of the transfer agreement identifier carried in the collection transaction request is performed during execution of the chaining process of the collection transaction request, and if the verification is successful, the to-be-transferred currency resource is unlocked and transferred to the account of the payee, thereby realizing a non-fixed-payee transfer initiated by the payer.

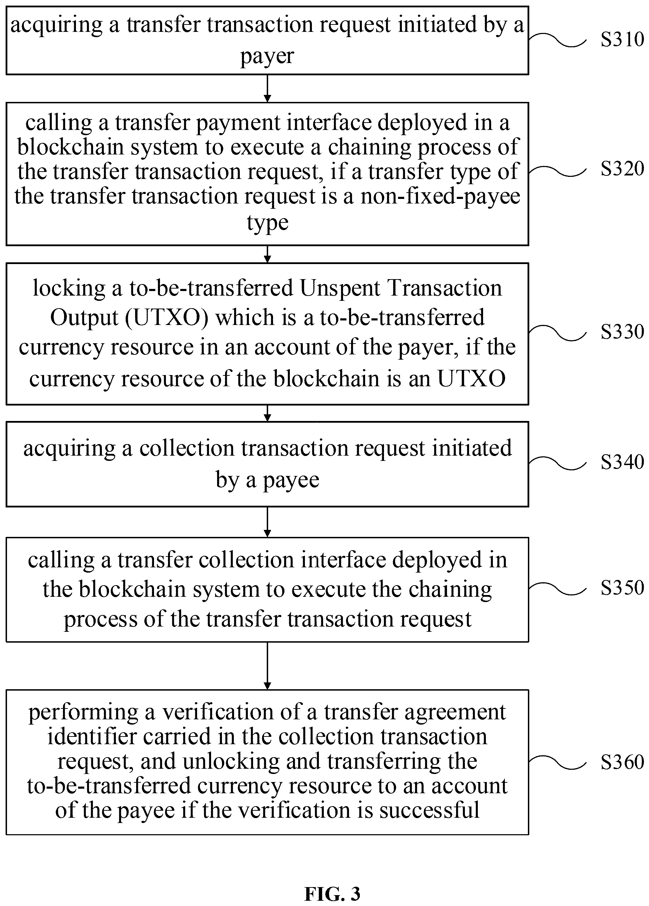

FIG. 3 is a schematic diagram of another blockchain transfer processing method according to an embodiment of the present disclosure. This embodiment is a further refinement of the above technical solution, and the technical solution in this embodiment may be combined with various optional solutions in one or more of the above embodiments. As shown in FIG. 3, a blockchain transfer processing method includes:
S310: acquiring a transfer transaction request initiated by a payer.
S320: calling the transfer payment interface function deployed in the blockchain system, and encrypting the to-be-transferred amount and the effective collection time using a private key of the payer, to obtain an encrypted character string.

In an optional implementation of this embodiment, the execution of the chaining process of the transfer transaction request initiated by the payer may include: if the transfer transaction request initiated by the payer is the non-fixed-payee type, the transfer payment interface function deployed in the blockchain system may be called to execute the chaining process of the transfer transaction request initiated by the payer. Among them, the transfer payment interface function deployed in the blockchain system may be CreateCheck.

In an optional implementation of this embodiment, in the process of executing the non-fixed-payee transfer transaction request initiated by the payer, the transfer agreement identifier may be acquired according to the non-fixed-payee transfer transaction request initiated by the payer.

S330: locking a to-be-transferred Unspent Transaction Output (UTXO) which is a to-be-transferred currency resource in an account of the payer, if the currency resource of the blockchain is an UTXO.

Among them, the currency resource UTXO of the blockchain may be realized based on a UTXO model that describes an UTXO owned by each account. The transaction output of the UTXO is associated with an account public key address. When the user uses an account private key to transfer a transaction output of a certain UTXO to other accounts through a transaction, it is equivalent to using a digital currency for transaction. Meanwhile, the original transaction output of the UTXO is spent and no longer associated with the account public key address.

In an optional implementation of this embodiment, in the process of executing the non-fixed-payee transfer transaction request initiated by the payer, the to-be-transferred currency resource in the account of the payer may also be locked.

Optionally, if the currency resource of the blockchain is the UTXO, the to-be-transferred UTXO, which is the to-be-transferred currency resource in the account of the payer, may be locked. In an optional implementation of this embodiment, a locking flag bit of the to-be-transferred UTXO, which is the to-be-transferred currency resource in the account of the payer, may be set as a locking state value to prohibit the UTXO from participating in the account transfer operation, wherein the locking state value may be '1' or any other value, which is not limited here.

It should be noted that in this embodiment, in the process of executing the non-fixed-payee transfer transaction request initiated by the payer, the to-be-transferred currency resource in the account of the payer may not be locked. In specific implementations, whether to lock the to-be-transferred currency resource may be selected according to the specific business scenarios, which is not limited here.

S340: acquiring a collection transaction request initiated by a payee.

S350: calling a transfer collection interface function deployed in the blockchain system to execute the chaining process of the transfer transaction request.

In an optional implementation of this embodiment, the execution of the chaining process of the collection transaction request initiated by the payee may include: calling a transfer collection interface function deployed in a blockchain system to execute the chaining process of the transfer transaction request initiated by the payee, wherein the transfer collection interface function deployed in the blockchain system may be ReceiveCheck.

S360: performing a verification of a transfer agreement identifier carried in the collection transaction request, and unlocking and transferring the to-be-transferred currency resource to an account of the payee if the verification is successful.

Among them, unlocking the to-be-transferred currency resource may include: setting a locking flag bit of the to-be-transferred UTXO as an unlocking state value, wherein the unlocking state value may be '0' or any other value, which is not limited here.

In an optional implementation of this embodiment, a verification of the transfer agreement identifier carried in the acquired collection transaction request may also be performed in the process of executing the collection transaction request initiated by the payee, and if the verification is successful, the to-be-transferred currency resource may be unlocked and transferred to the account of the payee.

Optionally, performing a verification of the transfer agreement identifier carried in the collection transaction request may include: querying the transfer agreement identifier in the transfer transaction request recorded in the blockchain according to the transfer agreement identifier carried in the collection transaction request; and performing a verification of the transfer agreement identifier using an account public key of the payer that initiates the transfer transaction request.

In an optional implementation of this embodiment, the transfer agreement identifier in the transfer transaction request initiated by the payer recorded in the blockchain may be queried according to the transfer agreement identifier carried in the transfer transaction request initiated by the payee; further, a verification of the transfer agreement identifier is performed using the public key of the payee that initiates the transfer transaction request, and if the verification is successful, the to-be-transferred currency resource is unlocked and transferred to the account of the payee.

The advantage of this setting lies in that the security of the to-be-transferred currency resource can be ensured and the transfer errors can be avoided.

Optionally, after performing a verification of the transfer agreement identifier carried in the collection transaction request, the method may further include: performing a verification of a validity period of the collection transaction request according to a transfer validity period set by the transfer transaction request recorded in the blockchain, and triggering a transfer operation if the verification is successful.

For example, in a case where the transfer validity period of the transfer transaction request recorded in the blockchain is 24 hours, i.e., the transfer transaction request initiated by the payer is valid within 24 hours after the payer initiates the transfer transaction request, if the payee initiates the collection transaction request at the 25^{th} hour after the payer initiates the transfer transaction request, then the validity period of the collection transaction request has expired and the transfer operation will not be triggered; and if the payee initiates the collection transaction request at the 20^{th} hour after the payer initiates the transfer transaction request, then the verification of the validity period of the collection transaction request is successful, and the transfer operation will be triggered.

The advantage of this setting lies in that the security of transfer currency resource can be further ensured.

In the solution of this embodiment, if the transfer type of the transfer transaction request is the non-fixed-payee type, the transfer payment interface function deployed in the blockchain system is called to execute the chaining process of the transfer transaction request; if the currency resource of the blockchain is an UTXO, the to-be-transferred UTXO, which is the to-be-transferred currency resource in the account of the payer, is locked; the transfer collection interface function deployed in the blockchain system is called to execute the chaining process of the transfer transaction request; the verification of the transfer agreement identifier carried in the collection transaction request is performed; and if the verification is successful, the to-be-transferred currency resource is unlocked and transferred to the account of the payee, thereby ensuring the security of the transfer currency resource while realizing a non-point-to-point transfer.

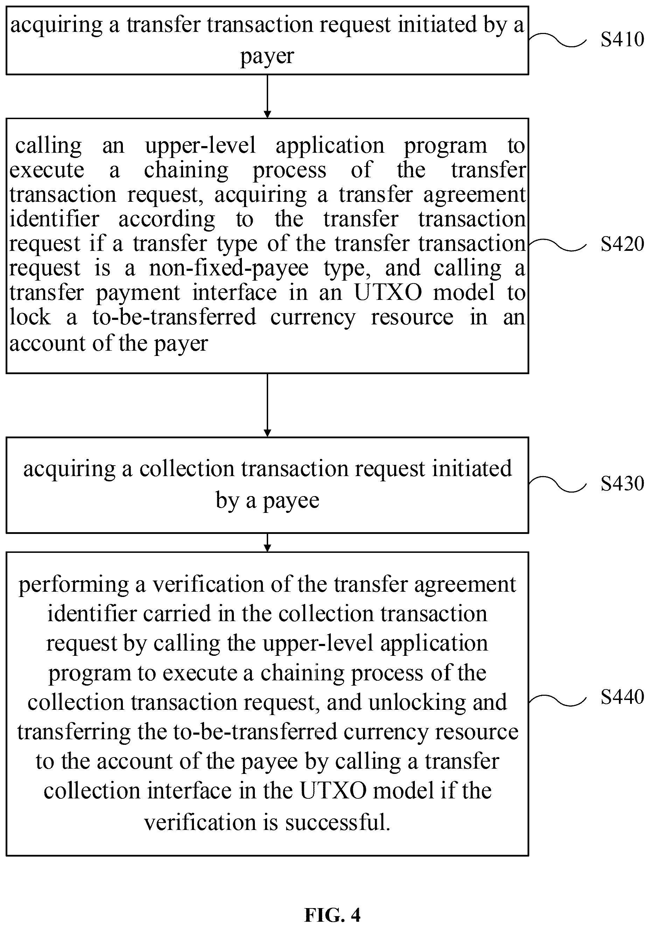

FIG. 4 is a schematic diagram of another transfer processing method for a blockchain according to an embodiment of the present disclosure. This embodiment is a further refinement of the above technical solution, and the technical solution in this embodiment may be combined with various optional solutions in one or more of the above embodiments. As shown in FIG. 4, a transfer processing method for a blockchain includes:
S410: acquiring a transfer transaction request initiated by a payer.
S420: calling an upper-level application program to execute a chaining process of the transfer transaction request, acquiring a transfer agreement identifier according to the transfer transaction request if a transfer type of the transfer transaction request is a non-fixed-payee type, and calling a transfer payment interface function in an UTXO model to lock a to-be-transferred currency resource in an account of the payer.

Among them, the currency resource of the blockchain may be realized based on the UTXO model, and the transfer transaction request may be realized based on the upper-level application program.

In an optional implementation of this embodiment, acquiring a transfer agreement identifier according to the transfer transaction request and locking the to-be-transferred currency resource in the account of the payer, if a transfer type of the transfer transaction request is a non-fixed-payee type during execution of the chaining process of the transfer transaction request may include: calling an upper-level application program to execute the chaining process of the transfer transaction request, acquiring the transfer agreement identifier according to the transfer transaction request and calling the transfer payment interface function in the UTXO model to lock the to-be-transferred currency resource in the account of the payer, if the transfer type of the transfer transaction request is the non-fixed-payee type.

S430: acquiring a collection transaction request initiated by a payee.

S440: performing a verification of the transfer agreement identifier carried in the collection transaction request by calling the upper-level application program to execute a chaining process of the collection transaction request, and unlocking and transferring the to-be-transferred currency resource to an account of the payee by calling a transfer collection interface function in the UTXO model if the verification is successful.

Among them, the collection transaction request may be realized based on the upper-level application program.

In an optional implementation of this embodiment, performing a verification of the transfer agreement identifier carried in the collection transaction request during execution of the chaining process of the collection transaction request, and unlocking and transferring the to-be-transferred currency resource to the account of the payee if the verification is successful may include: calling the upper-level application program to execute the chaining process of the collection transaction request, and performing a verification of the transfer agreement identifier carried in the collection transaction request, and unlocking and transferring the to-be-transferred currency resource to the account of the payee by calling a transfer collection interface function in the UTXO model if the verification is successful.

In the solution of this embodiment, a transfer transaction request initiated by a payer is acquired; an upper-level application program is called to execute a chaining process of the transfer transaction request; if a transfer type of the transfer transaction request is a non-fixed-payee type, a transfer agreement identifier is acquired according to the transfer transaction request, and a transfer payment interface function in an UTXO model is called to lock a to-be-transferred currency resource in an account of the payer; a collection transaction request initiated by a payee is acquired; the upper-level application program is called to execute a chaining process of the collection transaction request, and a verification of the transfer agreement identifier carried in the collection transaction request is performed; if the verification is successful, the to-be-transferred currency resource is unlocked and transferred to the account of the payee by calling a transfer collection interface function in the UTXO model, thereby realizing an UTXO-based non-point-to-point transfer, and solving the problem that the existing transfer operation mode is difficult to adapt to various transfer requirements under complex business scenarios.

In order to make those skilled in the art better understand the transfer processing method for the blockchain involved in the embodiments of the present disclosure, a specific example is adopted for explanations below, and the specific process includes:
Based on the transfer method implemented by the UTXO, the functional interface for processing the UTXO is added with two functions, i.e., a check creation interface CreateCheck and a check reception interface ReceiveCheck.

### 1. The algorithm of the check creation interface CreateCheck:

At least three pieces of input information are needed, including a public key of the payer, created denomination Balance (i.e., a to-be-transferred amount) and an effective time Expired. Specifically, the payer uses a private key thereof to encrypt the Balance and the Expired, and performs visual encoding (e.g., Base64 encoding) to obtain the transfer agreement identifier.

After a check drawer initiates a transfer transaction request based on a check creation interface, a blockchain node receives the transaction request and calls the UTXO CreateCheck for processing, and specifically may lock an UTXO corresponding to a check (or lock a quota). The so-called 'lock' may be adding a flag bit in the UTXO to mark that the UTXO cannot perform a transfer.

### 2. The algorithm of the check reception interface ReceiveCheck:

The payee acquires the transfer agreement identifier provided by a checksigning user (i.e., the payer) by any means such as offline; The payee user uses a private key thereof to encrypt the transfer agreement identifier and its own account number, and then initiates a transaction request based on the check reception interface; after receiving the transaction request, the blockchain node calls the check reception interface function for processing, specifically by performing a verification of a signature through a public key of a receiving user, and then performing a verification of the transfer agreement identifier according to a public key of a check drawer to prove that the check is valid and within a validity period. After that, the locked UTXO may be transferred to the receiving user.

Further, if the blockchain system realizes the business functions based on an upper-layer protocol mode, such as a smart contract mode, the functions of check creation and reception may be realized by designing an interface of a smart contract. In addition, in the process of executing the smart contract, if the functions of check creation and reception are to be dealt with, the check creation interface and the check reception interface of the UTXO may be called to similarly realize the above functions.

As can be seen from the above example, this embodiment can realize the new function of non-point-to-point transfer in the blockchain.

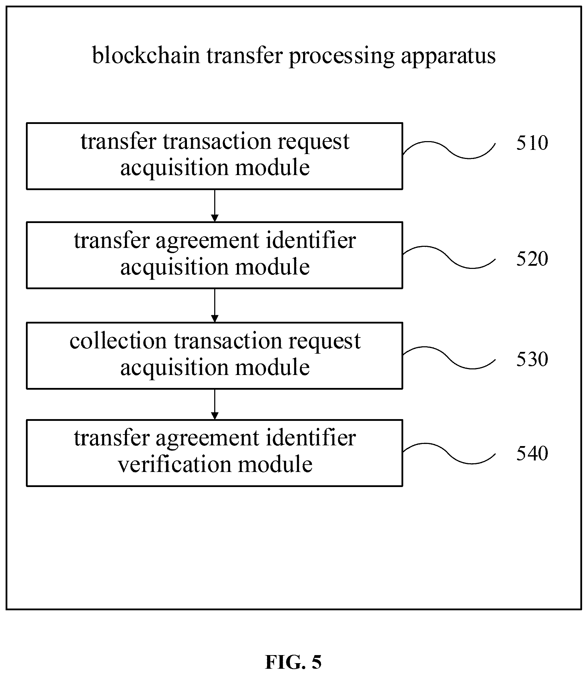

FIG. 5 is a block diagram of a blockchain transfer processing apparatus according to an embodiment of the present disclosure. The apparatus can perform a blockchain transfer processing method involved in any embodiment of the present disclosure and may be implemented by software and/or hardware. Specifically, referring to FIG. 5, the apparatus specifically includes: a transfer transaction request acquisition module 510, a transfer agreement identifier acquisition module 520, a collection transaction request acquisition module 530 and a transfer agreement identifier verification module 540.

Among them, the transfer transaction request acquisition module 510 is configured to acquire a transfer transaction request initiated by a payer;
the transfer agreement identifier acquisition module 520 is configured to acquire a transfer agreement identifier according to the transfer transaction request and lock a to-be-transferred currency resource in an account of the payer, if a transfer type of the transfer transaction request is a non-fixed-payee type during execution of a chaining process of the transfer transaction request;
the collection transaction request acquisition module 530 is configured to acquire a collection transaction request initiated by a payee; and
the transfer agreement identifier verification module 540 is configured to perform a verification of the transfer agreement identifier carried in the collection transaction request during execution of a chaining process of the collection transaction request, and unlock and transfer the to-be-transferred currency resource to an account of the payee if the verification is successful.

In the solution of this embodiment, a transfer transaction request initiated by a payer is acquired by a transfer transaction request acquisition module; a transfer agreement identifier is acquired according to the transfer transaction request and a to-be-transferred currency resource in an account of the payer is locked by a transfer agreement identifier acquisition module, if a transfer type of the transfer transaction request is a non-fixed-payee type during execution of a chaining process of the transfer transaction request; a collection transaction request initiated by a payee is acquired by a collection transaction request acquisition module; a verification of the transfer agreement identifier carried in the collection transaction request is performed by a transfer agreement identifier verification module during execution of a chaining process of the collection transaction request, and if the verification is successful, the to-be-transferred currency resource is unlocked and transferred to an account of the payee, thereby solving the problem that the existing transfer operation mode is difficult to adapt to various transfer requirements under complex business scenarios, and realizing a non-point-to-point transfer.

Optionally, the transfer transaction request acquisition module 510 includes a transfer data acquisition submodule and a transfer transaction request generation submodule;
the transfer data acquisition submodule is configured to acquire non-fixed-payee transfer data input by the payer;
the transfer transaction request generation submodule is configured to call a transfer payment interface function deployed in a blockchain system to process the transfer data to generate the transfer transaction request.

Optionally, the transfer data in this embodiment includes a to-be-transferred amount and an effective collection time;
the transfer transaction request generation submodule is specifically configured to call the transfer payment interface function deployed in the blockchain system, and encrypt the to-be-transferred amount and the effective collection time using a private key of the payer to obtain an encrypted character string; visually encode the encrypted character string to obtain the transfer agreement identifier; sign the transfer data, the transfer agreement identifier and a public key of the payer using the private key of the payer, and generate the transfer transaction request.

Optionally, the collection transaction request acquisition module 530 includes a transfer agreement identifier acquisition submodule and a collection transaction request generation submodule;
the transfer agreement identifier acquisition submodule is configured to acquire the transfer agreement identifier input by the payee;
the collection transaction request generation submodule is configured to call a transfer collection interface function deployed in a blockchain system to process the transfer agreement identifier to generate the collection transaction request.

Optionally, the collection transaction request generation submodule is specifically configured to call the transfer collection interface function deployed in the blockchain system, and encrypt the transfer agreement identifier and an account identifier of the payee using a private key of the payee to generate the collection transaction request.

Optionally, the transfer agreement identifier acquisition module 520 includes: a transfer transaction request chaining process execution submodule configured to call a transfer payment interface function deployed in a blockchain system to execute a chaining process of the transfer transaction request, if the transfer type of the transfer transaction request is the non-fixed-payee type;
the transfer agreement identifier verification module includes a collection transaction request chaining process execution submodule configured to call a transfer collection interface function deployed in the blockchain system to execute a chaining process of the transfer transaction request.

Optionally, the transfer agreement identifier acquisition module 520 further includes: a to-be-transferred currency resource locking submodule configured to lock a to-be-transferred UTXO which is the to-be-transferred currency resource in the account of the payer, if the currency resource of the blockchain is an UTXO.

Optionally, the to-be-transferred currency resource locking submodule is specifically configured to set a locking flag bit of the to-be-transferred UTXO, which is the to-be-transferred currency resource in the account of the payer, as a locking state value to prohibit the UTXO from participating in an account transfer operation;
correspondingly, the transfer agreement identifier acquisition module 520 further includes a to-be-transferred currency resource unlocking submodule configured to set the locking flag bit of the to-be-transferred UTXO as an unlocking state value.

Optionally, in this embodiment, the currency resource of the blockchain is realized based on an UTXO model, and the transfer transaction request and the collection transaction request are realized based on an upper-level application program, then:
the transfer agreement identifier acquisition module 520 is specifically configured to call the upper-level application program to execute the chaining process of the transfer transaction request, acquire the transfer agreement identifier according to the transfer transaction request if the transfer type of the transfer transaction request is the non-fixed-payee type, and call a transfer payment interface function in the UTXO model to lock the to-be-transferred currency resource in the account of the payer;
the transfer agreement identifier verification module 540 is specifically configured to perform a verification of the transfer agreement identifier carried in the collection transaction request by calling the upper-level application program to execute the chaining process of the collection transaction request, and unlock and transfer the to-be-transferred currency resource to the account of the payee by calling a transfer collection interface function in the UTXO model if the verification is successful.

Optionally, the transfer agreement identifier verification module 540 includes a transfer agreement identifier verification submodule configured to query the transfer agreement identifier in the transfer transaction request recorded in the blockchain according to the transfer agreement identifier carried in the collection transaction request; and
perform a verification of the transfer agreement identifier using an account public key of the payer that initiates the transfer transaction request.

Optionally, the transfer processing apparatus for the blockchain involved in this embodiment further includes a validity period verification module configured to perform a verification of a validity period of the collection transaction request according to a transfer validity period set by the transfer transaction request recorded in the blockchain, and trigger a transfer operation if the verification is successful.

The above blockchain transfer processing apparatus may perform a blockchain transfer processing method provided by any embodiment of the present disclosure, and has corresponding functional modules and beneficial effects of the performance of the method. For technical details not fully described in this embodiment, please refer to the transfer processing method for the blockchain provided by any embodiment of the present disclosure.

According to the embodiments of the present disclosure, the present disclosure further provides an electronic device and a readable storage medium.

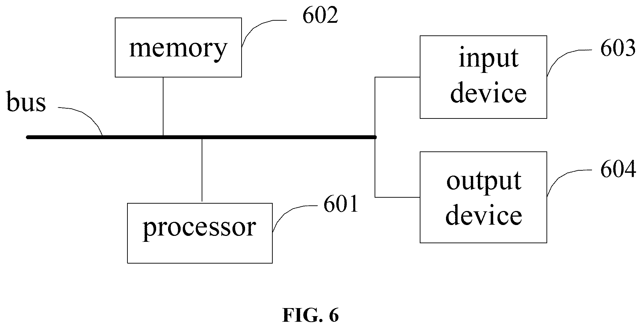

FIG.6 is a block diagram of an electronic device for implementing a blockchain transfer processing method according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital processor, a cellular phone, a smart phone, a wearable device and other similar computing devices. The components illustrated herein, connections and relationships therebetween, and functions thereof are merely used as examples, and are not intended to limit the implementations of the present disclosure described and/or claimed herein.

As shown in FIG. 6, the electronic device includes: one or more processors 601, a memory 602, and interfaces for connecting various components, including a high-speed interface and a low-speed interface. The various components are connected to each other by different buses, and may be mounted on a common mainboard or mounted in other ways as required. The processor may process instructions executed in the electronic device, including instructions stored in or on the memory to display graphical information of Graphical User Interface (GUI) on an external input/output device (e.g., a display device coupled to an interface). In other implementations, if necessary, a plurality of processors and/or a plurality of buses may be used together with a plurality of memories. Similarly, a plurality of electronic devices may be connected, each providing some necessary operations (e.g., acting as a server array, a group of blade servers, or a multi-processor system). In FIG. 6, one processor 601 is taken as an example.

The memory 602 is a non-transitory computer-readable storage medium provided by the present disclosure. The memory stores instructions executable by at least one processor, so that the at least one processor can perform the transfer processing method for the blockchain provided by the present disclosure. The non-transitory computer-readable storage medium of the present disclosure stores a computer instruction for enabling a computer to perform the transfer processing method for the blockchain provided by the present disclosure.

As a non-transitory computer-readable storage medium, the memory 602 may be configured to store a non-transitory software program, a non-transitory computer-executable program and modules, such as program instructions/modules corresponding to the transfer processing method for the blockchain in the embodiments of the present disclosure (e.g., the transfer transaction request acquisition module 510, the transfer agreement identifier acquisition module 520, the collection transaction request acquisition module 530 and the transfer agreement identifier verification module 540 as shown in FIG. 5). The processor 601 executes various functional applications and data processing of the server by running the non-transitory software programs, instructions and modules stored in the memory 602, thereby realizing the transfer processing method for the blockchain in the above method embodiments.

The memory 602 may include a program storage area and a data storage area, wherein the program storage area may store an operating system, and an application program required by at least one function; and the data storage area may store data created according to the use of the electronic device for implementing the transfer processing method for the blockchain in the embodiments of the present disclosure. In addition, the memory 602 may include a high-speed random-access memory, and may also include a non-transitory memory, such as at least one magnetic disk memory device, a flash memory device, or any other non-transitory solid memory device. In some embodiments, the memory 602 optionally includes memories remotely located relative to the processor 601, and these remote memories may be connected to the electronic device for implementing the transfer processing method for the blockchain in the embodiments of the present disclosure through a network. Examples of the network include, but are not limited to, the Internet, an intranet, a local area network, a mobile communication network and combinations thereof.

The electronic device for implementing the transfer processing method for the blockchain in the embodiments of the present disclosure may further include: an input device 603 and an output device 604. The processor 601, the memory 602, the input device 603, and the output device 604 may be connected by buses or in other ways, and the bus connection is taken as an example in FIG. 6.

The input device 603 may receive input digitals or character information, and generate a key signal input related to a user setting and a function control of the electronic device for implementing the transfer processing method for the blockchain in the embodiments of the present disclosure. The input device 603 for example may be a touch screen, a keypad, a mouse, a track pad, a touch pad, an indicator stick, one or more mouse buttons, a trackball, a joystick, etc. The output device 604 may include a display device, an auxiliary lighting apparatus (e.g., a light-emitting diode (LED)), a haptic feedback apparatus (e.g., a vibration motor), etc. The display device may include, but is not limited to, a liquid crystal display (LCD), an LED display, and a plasma display. In some implementations, the display device may be a touch screen.

Various implementations of the system and technology described here may be implemented in a digital electronic circuit system, an integrated circuit system, an Application Specific Integrated Circuit (ASIC), computer hardware, firmware, software, and/or combinations thereof. These various implementations may be implemented in one or more computer programs executable and/or interpretable on a programmable system including at least one programmable processor, and the programmable processor may be a dedicated or general programmable processor and capable of receiving and transmitting data and instructions from and to a storage system, at least one input device, and at least one output device.

These computing programs (also called as programs, software, software applications, or codes) include machine instructions of the programmable processor, and may be implemented with advanced processes and/or object-oriented programming languages, and/or assembly/machine languages. As used herein, the terms 'machine-readable medium' and 'computer-readable medium' refer to any computer program product, device, and/or apparatus (e. g., a magnetic disk, an optical disk, a memory and a programmable logic device (PLD)) for providing the machine instructions and/or the data to the programmable processor, including a machine-readable medium that receives machine instructions as machine-readable signals. The term 'machine-readable signal' refers to any signal for providing the machine instructions and/or the data to the programmable processor.

In order to provide an interaction with a user, the system and the technology described here may be implemented on a computer having a display apparatus (e. g., a cathode ray tube (CRT) or an LCD monitor) for displaying information to the user; and a keyboard and a pointing apparatus (e. g., a mouse or a trackball), through which the user can provide an input to the computer. Other kinds of apparatuses can also provide an interaction with the user. For example, a feedback provided to the user may be any form of sensory feedback (e.g., a visual feedback, an auditory feedback, or a tactile feedback); and an input from the user may be received in any form (including an acoustic input, a voice input or a tactile input).

The system and the technology described here may be embodied in a computing system including background components (e.g., acting as a data server), or a computing system including middleware components (e.g., an application server), or a computing system including front-end components (e.g., a user computer with a graphical user interface or a web browser, through which the user can interact with the implementations of the system and technology described here), or a computing system including any combination of such background components, middleware components and front-end components. The components of the system may be connected to each other through a digital data communication in any form or medium (e.g., a communication network). Examples of the communication network include a local area network (LAN), a wide area network (WAN), and the Internet.

A computer system may include a client and a server. The client and the server are generally remote from each other and usually interact through a communication network. The relationship between the client and the server is generated by computer programs running on corresponding computers and having a client-server relationship with each other. The server may be a cloud server, also called as a cloud computing server or a cloud host, which is a host product in a cloud computing service system, to solve the defects of difficult management and weak business expansibility in the services of the traditional physical host and the virtual private server (VPS).

According to the technical solutions of the embodiments of the present disclosure, it can solve the problem that the existing transfer operation mode is difficult to adapt to various transfer requirements under complex business scenarios, and realize a non-point-to-point transfer.

It should be understood that the steps may be reordered, added or deleted using the various forms of flows as illustrated above. For example, the steps described in the present disclosure may be performed concurrently, sequentially or in a different order, as long as the desired result of the technical solution disclosed in the present disclosure can be achieved, which is not limited herein.

The specific implementations above do not limit the protection scope of the present disclosure. It should be understood by those skilled in the art that various modifications, combinations, sub-combinations and replacements can be made according to the design requirements and other factors. Any modification, equivalent replacement and improvement made under the spirit and principle of the present disclosure should fall within the protection scope of the present disclosure.

## Claims

1. A blockchain transfer processing method applied to blockchain nodes, comprising:
acquiring (S110) a transfer transaction request initiated by a payer based on a deployment program of a blockchain system;
acquiring (S 120) a transfer agreement identifier according to the transfer transaction request and locking a to-be-transferred currency resource in an account of the payer, if a transfer type of the transfer transaction request is a non-fixed-payee type during execution of a chaining process of the transfer transaction request, wherein when the transfer type of the transfer transaction request is the non-fixed-payee type, there is no information of the payee in the transfer data input by the payer;
acquiring (S130) a collection transaction request initiated by a payee; and
performing (S140) a verification of the transfer agreement identifier carried in the collection transaction request during execution of a chaining process of the collection transaction request, and unlocking and transferring the to-be-transferred currency resource to an account of the payee, if the verification is successful,
wherein, the currency resource is Unspent Transaction Output (UTXO);
wherein locking the to-be-transferred currency resource in the account of the payer comprises:
setting a locking flag bit of the to-be-transferred UTXO, which is the to-be-transferred currency resource in the account of the payer, as a locking state value to prohibit the UTXO from participating in an account transfer operation;
correspondingly, unlocking the to-be-transferred currency resource comprises:
setting the locking flag bit of the to-be-transferred UTXO as an unlocking state value;
wherein performing (S140) the verification of the transfer agreement identifier carried in the collection transaction request comprises:
querying the transfer agreement identifier in the transfer transaction request recorded in the blockchain according to the transfer agreement identifier carried in the collection transaction request; and
performing the verification of the transfer agreement identifier using an account public key of the payer that initiates the transfer transaction request.

2. The blockchain transfer processing method according to claim 1, wherein acquiring the transfer transaction request initiated by the payer comprises:
acquiring (S210) non-fixed-payee transfer data input by the payer; and
calling (S220) a transfer payment interface function deployed in the blockchain system to process the transfer data, to generate the transfer transaction request.

3. The blockchain transfer processing method according to claim 2, wherein the transfer data comprises a to-be-transferred amount and an effective collection time, calling the transfer payment interface function deployed in the blockchain system to process the transfer data to generate the transfer transaction request comprises:
calling (S320) the transfer payment interface function deployed in the blockchain system, and encrypting the to-be-transferred amount and the effective collection time using a private key of the payer, to obtain an encrypted character string;
visually encoding the encrypted character string to obtain the transfer agreement identifier; and
signing the transfer data, the transfer agreement identifier and a public key of the payer using the private key of the payer, and generating the transfer transaction request.

4. The blockchain transfer processing method according to claim 1, wherein acquiring (S130) the collection transaction request initiated by the payee comprises:
acquiring (S240) a transfer agreement identifier input by the payee; and
calling (S250) a transfer collection interface function deployed in the blockchain system to process the transfer agreement identifier to generate the collection transaction request.

5. The blockchain transfer processing method according to claim 4, wherein calling (S250) the transfer collection interface function deployed in the blockchain system to process the transfer agreement identifier to generate the collection transaction request comprises:
calling the transfer collection interface function deployed in the blockchain system, and encrypting the transfer agreement identifier and an account identifier of the payee using a private key of the payee, to generate the collection transaction request.

6. The blockchain transfer processing method according to claim 1, wherein:
the execution of the chaining process of the transfer transaction request comprises: calling a transfer payment interface function deployed in a blockchain system to execute the chaining process of the transfer transaction request, if the transfer type of the transfer transaction request is the non-fixed-payee type; and
the execution of the chaining process of the collection transaction request comprises: calling a transfer collection interface function deployed in the blockchain system to execute the chaining process of the transfer transaction request.

7. The blockchain transfer processing method according to any one of claims 1 to 6, wherein the currency resource of the blockchain is realized based on an UTXO model, and the transfer transaction request and the collection transaction request are realized based on an upper-level application program,
acquiring (S120) a transfer agreement identifier according to the transfer transaction request and locking a to-be-transferred currency resource in an account of the payer, if a transfer type of the transfer transaction request is a non-fixed-payee type during execution of a chaining process of the transfer transaction request comprises:
calling the upper-level application program to execute the chaining process of the transfer transaction request, acquiring the transfer agreement identifier according to the transfer transaction request and calling a transfer payment interface function in the UTXO model to lock the to-be-transferred currency resource in the account of the payer, if the transfer type of the transfer transaction request is the non-fixed-payee type;
performing a verification of the transfer agreement identifier carried in the collection transaction request during execution of a chaining process of the collection transaction request, and unlocking and transferring the to-be-transferred currency resource to an account of the payee, if the verification is successful comprises:
performing a verification of the transfer agreement identifier carried in the collection transaction request by calling the upper-level application program to execute the chaining process of the collection transaction request, and unlocking and transferring the to-be-transferred currency resource to the account of the payee by calling a transfer collection interface function in the UTXO model, if the verification is successful.

8. The blockchain transfer processing method according to any one of claims 1 to 6, wherein after performing a verification of the transfer agreement identifier carried in the collection transaction request, the method further comprises:
performing a verification of a validity period of the collection transaction request according to a transfer validity period set by the transfer transaction request recorded in the blockchain, and triggering a transfer operation if the verification is successful.

9. A blockchain transfer processing apparatus, comprising a plurality of modules configured to perform the blockchain transfer processing method according to any one of claims 1 to 8.

10. An electronic device, comprising:
at least one processor (601); and
a memory (602) communicatively connected to the at least one processor (601), wherein
the memory (602) stores instructions executable by the at least one processor (601), the instructions, when executed by the at least one processor (601), enable the at least one processor (601) to perform the blockchain transfer processing method according to any one of claims 1 to 8.

11. A computer-readable storage medium for storing computer instructions, wherein the computer instructions, when executed by a computer, cause the computer to implement the blockchain transfer processing method according to any one of claims 1 to 8.

12. A computer program product comprising computer executable instructions stored thereon, wherein the executable instructions, when executed by a processor (601), cause the processor (601) to implement the blockchain transfer processing method according to any one of claims 1 to 8.

## Patentansprüche

1. Blockchain-Überweisung-Verarbeitung-Verfahren, welches auf Blockchain-Knoten angewendet wird, aufweisend:
Beschaffen (S110) einer Überweisung-Transaktion-Anfrage, welche von einem Zahler initiiert wird, basierend auf einem Bereitstellungsprogramms eines Blockchain-Systems;
Beschaffen (S120) eines Überweisung-Vereinbarung-Identifikators gemäß der Überweisung-Transaktion-Anfrage und Sperren einer zu überweisenden Währungsressource in einem Konto des Zahlers, wenn ein Überweisungstyp der Überweisung-Transaktion-Anfrage ein Nicht-Festgelegter-Zahlungsempfänger-Typ ist, während der Ausführung eines Verkettungsprozesses der Überweisung-Transaktion-Anfrage, wobei, wenn der Überweisungstyp der Überweisung-Transaktion-Anfrage der Nicht-Festgelegter-Zahlungsempfänger-Typ ist, es keine Informationen über den Zahlungsempfänger in den Überweisungsdaten gibt, welche von dem Zahler eingegeben werden;
Beschaffen (S130) einer Einzug-Transaktion-Anfrage, welche von einem Zahlungsempfänger initiiert wird; und
Durchführen (S140) einer Verifikation des Überweisung-Vereinbarung-Identifikators, welcher in der Einzug-Transaktion-Anfrage beinhaltet ist, während der Ausführung eines Verkettungsprozesses der Einzug-Transaktion-Anfrage, und Freigeben und Überweisen der zu überweisenden Währungsressource an ein Konto des Zahlungsempfängers, wenn die Verifikation erfolgreich ist,
wobei die Währungsressource ein Nicht-Ausgegebener-Transaktionsoutput (UTXO) ist;
wobei das Sperren der zu überweisenden Währungsressource in dem Konto des Zahlers aufweist:
Einstellen eines Sperrmarkierungsbits des zu überweisenden UTXO, welcher die zu überweisende Währungsressource in dem Konto des Zahlers ist, als einen Sperrzustandswert, um zu verhindern, dass der UTXO an einem Konto-Überweisung-Vorgang teilnimmt;
wobei in korrespondierender Weise, das Freigben der zu überweisenden Währungsressource aufweist:
Einstellen des Sperrmarkierungsbits des zu überweisenden UTXO als einen Freigabezustandswert;
wobei das Durchführen (S140) der Verifikation des Überweisung-Vereinbarung-Identifikators, welcher in der Einzug-Transaktion-Anfrage beinhaltet ist, aufweist:
Abfragen des Überweisung-Vereinbarung-Identifikators in der Überweisung-Transaktion-Anfrage, welche in der Blockchain aufgezeichnet ist, gemäß dem Überweisung-Vereinbarung-Identifikator, welcher in der Einzug-Transaktion-Anfrage beinhaltet ist; und
Durchführen der Verifikation des Überweisung-Vereinbarung-Identifikators unter Verwendung eines öffentlichen Kontoschlüssels des Zahlers, welcher die Überweisung-Transaktion-Anfrage initiiert.

2. Blockchain-Überweisung-Verarbeitung-Verfahren gemäß Anspruch 1, wobei das Beschaffen der Überweisung-Transaktion-Anfrage, welche vom Zahler initiiert wird, aufweist:
Beschaffen (S210) von Nicht-Festgelegter-Zahlungsempfänger-Überweisungsdaten, welche von dem Zahler eingegeben werden; und
Aufrufen (S220) einer Überweisung-Zahlung-Schnittstelle-Funktion, welche in dem Blockchain-System bereitgestellt wird, um die Überweisungsdaten zu verarbeiten, um die Überweisung-Transaktion-Anfrage zu generieren.

3. Blockchain-Überweisung-Verarbeitung-Verfahren gemäß Anspruch 2, wobei die Überweisungsdaten einen zu überweisenden Betrag und eine effektive Einzugszeit aufweisen, wobei das Aufrufen der Überweisung-Zahlung-Schnittstelle-Funktion, welche in dem Blockchain-System bereitgestellt wird, um die Überweisung-Transaktion-Anfrage zu generieren, aufweist:
Aufrufen (S320) der Überweisung-Zahlung-Schnittstelle-Funktion, welche in dem Blockchain-System bereitgestellt wird, und Verschlüsseln des zu überweisenden Betrags und der effektiven Einzugszeit unter Verwendung eines privaten Schlüssels des Zahlers, um eine verschlüsselte Zeichenkette zu erlangen;
visuelles Verschlüsseln der verschlüsselten Zeichenkette, um den Überweisung-Vereinbarung-Identifikator zu erlangen; und
Signieren der Überweisungsdaten, des Überweisung-Vereinbarung-Identifikators und eines öffentlichen Schlüssels des Zahlers unter Verwendung des privaten Schlüssels des Zahlers, und Generieren der Überweisung-Transaktion-Anfrage.

4. Blockchain-Überweisung-Verarbeitung-Verfahren gemäß Anspruch 1, wobei das Beschaffen (S130) der Einzug-Transaktion-Anfrage, welche von dem Zahlungsempfänger initiiert wird, aufweist:
Beschaffen (S240) eines Überweisung-Vereinbarung-Identifikators, welcher von dem Zahlungsempfänger eingegeben wird; und
Aufrufen (S250) einer Überweisung-Einzug-Schnittstelle-Funktion, welche in dem Blockchain-System bereitgestellt wird, um den Überweisung-Vereinbarung-Identifikator zu verarbeiten, um die Einzug-Transaktion-Anfrage zu generieren.

5. Blockchain-Überweisung-Verarbeitung-Verfahren gemäß Anspruch 4, wobei das Aufrufen (S250) der Überweisung-Einzug-Schnittstelle-Funktion, welche in dem Blockchain-System bereitgestellt wird, um den Überweisung-Vereinbarung-Identifikator zu verarbeiten, um die Einzug-Transaktion-Anfrage zu generieren, aufweist:
Aufrufen der Überweisung-Einzug-Schnittstelle-Funktion, welche in dem Blockchain-System bereitgestellt wird, und Verschlüsseln des Überweisung-Vereinbarung-Identifikators und eines Konto-Identifikators des Zahlungsempfängers unter Verwendung eines privaten Schlüssels des Zahlungsempfängers, um die Einzug-Transaktion-Anfrage zu generieren.

6. Blockchain-Überweisung-Verarbeitung-Verfahren gemäß Anspruch 1, wobei:
die Ausführung des Verkettungsprozesses der Überweisung-Transaktion-Anfrage aufweist: Aufrufen einer Überweisung-Zahlung-Schnittstelle-Funktion, welche in einem Blockchain-System bereitgestellt wird, um den Verkettungsprozess der Überweisung-Transaktion-Anfrage auszuführen, wenn der Überweisungstyp der Überweisung-Transaktion-Anfrage der Nicht-Festgelegter-Zahlungsempfänger-Typ ist; und
die Ausführung des Verkettungsprozesses der Überweisung-Transaktion-Anfrage aufweist: Aufrufen einer Überweisung-Einzug-Schnittstelle-Funktion, welche in dem Blockchain-System bereitgestellt wird, um den Verkettungsprozess der Überweisung-Transaktion-Anfrage durchzuführen.

7. Blockchain-Überweisung-Verarbeitung-Verfahren gemäß einem der Ansprüche 1 bis 6, wobei die Währungsressource der Blockchain realisiert wird basierend auf einem UTXO-Modell, und wobei die Überweisung-Transaktion-Anfrage und die Einzug-Transaktion-Anfrage realisiert werden basierend auf einem Oberes-Level-Anwendung-Programm,
wobei das Beschaffen (S120) eines Überweisung-Vereinbarung-Identifikators gemäß der Überweisung-Transaktion-Anfrage und das Sperren einer zu überweisenden Währungsressource in einem Konto des Zahlers, wenn ein Überweisungstyp der Überweisung-Transaktion-Anfrage ein Nicht-Festgelegter-Zahlungsempfänger-Typ ist, während der Ausführung eines Verkettungsprozesses der Überweisung-Transaktion-Anfrage, aufweist:
Aufrufen des Oberes-Level-Anwendung-Programms, um den Verkettungsprozess der Überweisung-Transaktion-Anfrage auszuführen, Beschaffen des Überweisung-Vereinbarung-Identifikators gemäß der Überweisung-Transaktion-Anfrage und Aufrufen einer Überweisung-Zahlung-Schnittstelle-Funktion in dem UTXO-Modell, um die zu überweisende Währungsressource in dem Konto des Zahlers zu sperren, wenn der Überweisungstyp der Überweisung-Transaktion-Anfrage der Nicht-Festgelegter-Zahlungsempfänger-Typ ist;
wobei das Durchführen einer Verifikation des Überweisung-Vereinbarung-Identifikators, welcher in der Einzug-Transaktion-Anfrage beinhaltet ist, während der Ausführung eines Verkettungsprozesses der Einzug-Transaktion-Anfrage, und das Freigeben und Überweisen der zu überweisenden Währungsressource an ein Konto des Zahlungsempfängers, wenn die Verifikation erfolgreich ist, aufweist:
Durchführen einer Verifikation des Überweisung-Vereinbarung-Identifikators, welcher in der Einzug-Transaktion-Anfrage beinhaltet ist, mittels Aufrufens des Oberes-Level-Anwendung-Programms, um den Verkettungsprozess der Einzug-Transaktion-Anfrage auszuführen, und Freigeben und Überweisen der zu überweisenden Währungsressource an das Konto des Zahlungsempfängers mittels Aufrufens einer Überweisung-Einzug-Schnittstelle-Funktion in dem UTXO-Modell, wenn die Verifikation erfolgreich ist.

8. Blockchain-Überweisung-Verarbeitung-Verfahren gemäß einem der Ansprüche 1 bis 6, wobei, nach dem Durchführen der Verifikation des Überweisung-Vereinbarung-Identifikators, welcher in der Einzug-Transaktion-Anfrage beinhaltet ist, das Verfahren ferner aufweist:
Durchführen einer Verifikation einer Gültigkeitsdauer der Einzug-Transaktion-Anfrage gemäß einer Überweisung-Gültigkeitsdauer, welche mittels der Überweisung-Transaktion-Anfrage, welche in der Blockchain aufgezeichnet ist, festgelegt ist, und Auslösen eines Überweisungsvorgangs, wenn die Verifikation erfolgreich ist.

9. Blockchain-Überweisung-Verarbeitung-Vorrichtung, welche mehrere Module aufweist, welche konfiguriert sind, um das Blockchain-Überweisung-Verarbeitung-Verfahren gemäß einem der Ansprüche 1 bis 8 durchzuführen.

10. Elektronische Vorrichtung, aufweisend:
mindestens einen Prozessor (601); und
einen Speicher (602), welcher kommunikativ mit dem mindestens einen Prozessor (601) verbunden ist, wobei der Speicher (602) Anweisungen speichert, welche mittels des mindestens einen Prozessors (601) ausführbar sind, wobei die Anweisungen, wenn sie mittels des mindestens einen Prozessors (601) ausgeführt werden, den mindestens einen Prozessor (601) in die Lage dazu versetzen, das Blockchain-Überweisung-Verarbeitung-Verfahren gemäß einem der Ansprüche 1 bis 8 durchzuführen.

11. Computerlesbares Speichermedium zum Speichern von Computeranweisungen, wobei die Computeranweisungen, wenn sie mittels eines Computers ausgeführt werden, den Computer dazu veranlassen, das Blockchain-Überweisung-Verarbeitung-Verfahren gemäß einem der Ansprüche 1 bis 8 zu implementieren.

12. Computerprogrammprodukt, welches computerausführbare Anweisungen aufweist, welche darauf gespeichert sind, wobei die ausführbaren Anweisungen, wenn sie mittels eines Prozessors (601) ausgeführt werden, den Prozessor (601) dazu veranlassen, das Blockchain-Überweisung-Verarbeitung-Verfahren gemäß einem der Ansprüche 1 bis 8 zu implementieren.

## Revendications

1. Procédé de traitement de transfert de blockchain appliqué à des noeuds de blockchain, comprenant :
l'acquisition (S110) d'une demande de transaction de transfert initiée par un payeur sur la base d'un programme de déploiement d'un système de blockchain ;
l'acquisition (S120) d'un identifiant d'accord de transfert conformément à la demande de transaction de transfert et le verrouillage d'une ressource monétaire à transférer sur un compte du payeur, si un type de transfert de la demande de transaction de transfert est un type de bénéficiaire non fixe pendant l'exécution d'un processus d'enchaînement de la demande de transaction de transfert, dans lequel, lorsque le type de transfert de la demande de transaction de transfert est le type de bénéficiaire non fixe, il n'y a pas d'information sur le bénéficiaire dans les données de transfert saisies par le payeur ;
l'acquisition (S130) d'une demande de transaction de collecte initiée par un bénéficiaire ; et
l'exécution (S140) d'une vérification de l'identifiant d'accord de transfert figurant dans la demande de transaction de collecte pendant l'exécution d'un processus d'enchaînement de la demande de transaction de collecte, et le déverrouillage et le transfert de la ressource monétaire à transférer sur un compte du bénéficiaire, si la vérification est réussie,
dans lequel la ressource monétaire est une sortie de transaction non dépensée (UTXO) ;
dans lequel le verrouillage de la ressource monétaire à transférer sur le compte du payeur comprend :
la définition d'un bit d'indicateur de verrouillage de l'UTXO à transférer, qui est la ressource monétaire à transférer sur le compte du payeur, en tant que valeur d'état de verrouillage pour interdire à l'UTXO de participer à une opération de transfert de compte ;
en conséquence, le déverrouillage de la ressource monétaire à transférer comprend :
la définition du bit d'indicateur de verrouillage de l'UTXO à transférer en tant que valeur d'état de déverrouillage ;
dans lequel l'exécution (S140) de la vérification de l'identifiant d'accord de transfert figurant dans la demande de transaction de collecte comprend :
l'interrogation de l'identifiant d'accord de transfert dans la demande de transaction de transfert enregistrée dans la blockchain en fonction de l'identifiant d'accord de transfert figurant dans la demande de transaction de collecte ; et
l'exécution de la vérification de l'identifiant d'accord de transfert en utilisant une clé publique de compte du payeur qui initie la demande de transaction de transfert.

2. Procédé de traitement de transfert de blockchain selon la revendication 1, dans lequel l'acquisition de la demande de transaction de transfert initiée par le payeur comprend :
l'acquisition (S210) de données de transfert de bénéficiaire non fixe saisies par le payeur ; et
l'appel (S220) d'une fonction d'interface de paiement de transfert déployée dans le système de blockchain pour traiter les données de transfert, afin de générer la demande de transaction de transfert.

3. Procédé de traitement de transfert de blockchain selon la revendication 2, dans lequel les données de transfert comprennent un montant à transférer et un temps de collecte effectif, l'appel de la fonction d'interface de paiement de transfert déployée dans le système de blockchain pour traiter les données de transfert, afin de générer la demande de transaction de transfert, comprend :
l'appel (S320) de la fonction d'interface de paiement de transfert déployée dans le système de blockchain, et le chiffrage du montant à transférer et du temps de collecte effectif en utilisant une clé privée du payeur, afin d'obtenir une chaîne de caractères chiffrée ;
le codage visuel de la chaîne de caractères chiffrée pour obtenir l'identifiant d'accord de transfert ; et
la signature des données de transfert, de l'identifiant d'accord de transfert et d'une clé publique du payeur en utilisant la clé privée du payeur, et la génération de la demande de transaction de transfert.

4. Procédé de traitement de transfert de blockchain selon la revendication 1, dans lequel l'acquisition (S130) de la demande de transaction de collecte initiée par le bénéficiaire comprend :
l'acquisition (S240) d'un identifiant d'accord de transfert saisi par le bénéficiaire ; et
l'appel (S250) d'une fonction d'interface de collecte de transfert déployée dans le système de blockchain pour traiter l'identifiant d'accord de transfert afin de générer la demande de transaction de collecte.

5. Procédé de traitement de transfert de blockchain selon la revendication 4, dans lequel l'appel (S250) de la fonction d'interface de collecte de transfert déployée dans le système de blockchain pour traiter l'identifiant d'accord de transfert afin de générer la demande de transaction de collecte comprend :
l'appel de la fonction d'interface de collecte de transfert déployée dans le système de blockchain, et le chiffrage de l'identifiant d'accord de transfert et d'un identifiant de compte du bénéficiaire en utilisant une clé privée du bénéficiaire, afin de générer la demande de transaction de collecte.

6. Procédé de traitement de transfert de blockchain selon la revendication 1, dans lequel :
l'exécution du processus d'enchaînement de la demande de transaction de transfert comprend : l'appel d'une fonction d'interface de paiement de transfert déployée dans un système de blockchain pour exécuter le processus d'enchaînement de la demande de transaction de transfert, si le type de transfert de la demande de transaction de transfert est le type de bénéficiaire non fixe ; et
l'exécution du processus d'enchaînement de la demande de transaction de collecte comprend : l'appel d'une fonction d'interface de collecte de transfert déployée dans le système de blockchain pour exécuter le processus d'enchaînement de la demande de transaction de transfert.

7. Procédé de traitement de transfert de blockchain selon l'une quelconque des revendications 1 à 6, dans lequel la ressource monétaire de la blockchain est réalisée sur la base d'un modèle UTXO, et la demande de transaction de transfert et la demande de transaction de collecte sont réalisées sur la base d'un programme d'application de niveau supérieur,
l'acquisition (S120) d'un identifiant d'accord de transfert conformément à la demande de transaction de transfert et le verrouillage d'une ressource monétaire à transférer sur un compte du payeur, si un type de transfert de la demande de transaction de transfert est un type de bénéficiaire non fixe pendant l'exécution d'un processus d'enchaînement de la demande de transaction de transfert comprend :
l'appel du programme d'application de niveau supérieur pour exécuter le processus d'enchaînement de la demande de transaction de transfert, l'acquisition de l'identifiant d'accord de transfert conformément à la demande de transaction de transfert et l'appel d'une fonction d'interface de paiement de transfert dans le modèle UTXO pour verrouiller la ressource monétaire à transférer sur le compte du payeur, si le type de transfert de la demande de transaction de transfert est le type de bénéficiaire non fixe ;
l'exécution d'une vérification de l'identifiant d'accord de transfert figurant dans la demande de transaction de collecte pendant l'exécution d'un processus d'enchaînement de la demande de transaction de collecte, et le déverrouillage et le transfert de la ressource monétaire à transférer sur un compte du bénéficiaire, si la vérification est réussie, comprend :
l'exécution d'une vérification de l'identifiant d'accord de transfert figurant dans la demande de transaction de collecte en appelant le programme d'application de niveau supérieur à exécuter le processus d'enchaînement de la demande de transaction de collecte, et le déverrouillage et le transfert de la ressource monétaire à transférer sur le compte du bénéficiaire en appelant une fonction d'interface de collecte de transfert dans le modèle UTXO, si la vérification est réussie.

8. Procédé de traitement de transfert de blockchain selon l'une quelconque des revendications 1 à 6, dans lequel, après avoir effectué une vérification de l'identifiant d'accord de transfert figurant dans la demande de transaction de collecte, le procédé comprend en outre :
l'exécution d'une vérification d'une période de validité de la demande de transaction de collecte en fonction d'une période de validité de transfert définie par la demande de transaction de transfert enregistrée dans la blockchain, et le déclenchement d'une opération de transfert si la vérification est réussie.

9. Dispositif de traitement de transfert de blockchain, comprenant une pluralité de modules configurés pour exécuter le procédé de traitement de transfert de blockchain selon l'une quelconque des revendications 1 à 8.

10. Dispositif électronique, comprenant :
au moins un processeur (601) ; et
une mémoire (602) connectée de manière communicative audit au moins un processeur (601), où
la mémoire (602) stocke des instructions exécutables par ledit au moins un processeur (601), les instructions, lorsqu'elles sont exécutées par ledit au moins un processeur (601), permettent à l'au moins un processeur (601) d'exécuter le procédé de traitement de transfert de blockchain selon l'une quelconque des revendications 1 à 8.

11. Support de stockage lisible par ordinateur pour stocker des instructions informatiques, dans lequel les instructions informatiques, lorsqu'elles sont exécutées par un ordinateur, amènent l'ordinateur à mettre en oeuvre le procédé de traitement de transfert de blockchain selon l'une quelconque des revendications 1 à 8.

12. Produit programme informatique comprenant des instructions exécutables par ordinateur stockées sur celui-ci, dans lequel les instructions exécutables, lorsqu'elles sont exécutées par un processeur (601), amènent le processeur (601) à mettre en oeuvre le procédé de traitement de transfert de blockchain selon l'une quelconque des revendications 1 à 8.
